(19) Europäisches Patentamt
European Patent Office
Office européen des brevets

(11) Veröffentlichungsnummer: **0 002 862**
**A2**

# (12) EUROPÄISCHE PATENTANMELDUNG

(21) Anmeldenummer: **78200370.1**

(22) Anmeldetag: **15.12.78**

(51) Int. Cl.[2]: **C 09 J 3/14,** C 08 F 232/06

(30) Priorität: **23.12.77 DE 2757534**

(43) Veröffentlichungstag der Anmeldung: **11.07.79 Patentblatt 79/14**

(84) Benannte Vertragsstaaten: **BE CH DE FR GB IT NL SE**

(71) Anmelder: **HOECHST AKTIENGESELLSCHAFT, Werk Albert Postfach 12 9101, D-6200 Wiesbaden (DE)**

(72) Erfinder: **Werner, Gerhard, Dr., Zum Talblick 50, D-6246 Glashütten 1 (DE)**
Erfinder: **Gutte, Richard, Heimchenweg 52, D-6230 Frankfurt-Main 80 (DE)**
Erfinder: **Schmelzer, Heinz, Schlossbergstrasse 15, D-6531 Rümmelsheim (DE)**
Erfinder: **Sattelmeyer, Richard, Dr., Nonnenwaldweg 20, D-6229 Schlangenbad-Georgenborn (DE)**

(54) **Bindemittel für Klebstoffe.**

(57) Bindemittel für Klebstoffe auf Basis von thermisch hergestellten Copolymerisaten cyclischer Dieneinheiten mit einem Gehalt an Copolymerisaten aus mindestens 60 Gew.-% Cyclopentadieneinheiten, wovon bis zu 30 Gew.-% alkylierte Cyclopentadieneinheiten mit 1 bis 4 C-Atomen in der Alkylgruppe sein können, und mindestens 5 Gew.-% von Vinylestern von Monocarbonsäuren mit 1 bis 18 C-Atomen, dadurch gekennzeichnet, daß das Copolymerisat a) zu 60 bis 90 Gew.-% aus Cyclopentadieneinheiten b) zu mindestens 5 Gew.-% aus den Vinylestern und c) zu mindestens 5 Gew.-% aus olefinisch ungesättigten aromatischen Kohlenwasserstoffen aufgebaut ist und als solches oder in hydrierter Form vorliegt.

EP 0 002 862 A2

HOECHST AKTIENGESELLSCHAFT, 6230 Frankfurt/Main 80
Zustellungsadresse: Hoechst Aktiengesellschaft, Werk Albert, Postfach 12 9101, 6200 Wiesbaden

Auslandstext
zu P 27 57 534.4
(=Hoe 77/A015)
vom 23.12.1977

Bindemittel für Klebstoffe

Die Erfindung betrifft Bindemittel für Klebstoffe auf Basis von thermisch hergestellten Copolymerisaten.

Es ist ein Bindemittel für Klebstoffe auf der Basis von thermisch hergestellten Copolymerisaten cyclischer Dieneinheiten bekannt (DE-OS 26 18 628), das Copolymerisate aus 95 bis 60, vorzugsweise 90 bis 70 Gew.-% Cyclopentadieneinheiten und 5 bis 40, vorzugsweise 10 bis 30 Gew.-% von Vinylestern von Monocarbonsäuren mit 1 bis 18 C-Atomen enthält.

Diese Klebmittel haben sich zwar gut bewährt, doch war es erwünscht, das Angebot an Bindemitteln für Klebstoffe noch zu erweitern.

Es wurde nun ein Bindemittel für Klebstoffe auf Basis von thermisch hergestellten Copolymerisaten cyclischer Dieneinheiten mit einem Gehalt an Copolymerisaten aus mindestens 60 Gew.-% Cyclopentadieneinheiten und mindestens 5 Gew.-% von Vinylestern von Monocarbonsäuren mit 1 bis 18 C-Atomen gefunden, das dadurch gekennzeichnet ist, daß das Copolymerisat a) zu 60 bis 90 Gew.-% aus Cyclopentadieneinheiten, b) zu mindestens 5 Gew.-% aus den Vinylestern und c) zu mindestens 5 Gew.-% aus olefinisch ungesättigten aromatischen Kohlenwasserstoffen, vorzugsweise Styrol, aufgebaut ist.

Die erfindungsgemäßen Bindemittel haben den Vorteil, daß sie mit Äthylen-Vinylester-Copolymeren, insbesondere Äthylyen-Vinylacetat-Copolymeren, die häufig in Schmelzklebern verwendet werden, gut verträglich sind, so daß zumeist kein Zusatz einer weiteren Substanz erforderlich ist, um ein Ausfallen bzw. eine Trübung zu verhindern.

Zweckmäßig ist das Terpolymerisat a) zu 70 bis 85 Gew.-% aus Cyclopentadieneinheiten, b) zu mindestens 10 Gew.-% aus dem Vinylester und c) zum Rest aus den ungesättigten aromatischen Kohlenwasserstoffen aufgebaut. Das Gewichtsverhältnis des Vinylesters b) zu den ungesättigten aromatischen Kohlenwasserstoffen c) liegt im allgemeinen zwischen 3:1 und 1:3.

Unter dem Ausdruck "Cyclopentadieneinheiten" sind Cyclopentadien, Dicyclopentadien, deren Mono- und Dialkylderivate mit jeweils 1 bis 4 C-Atomen in der Alkylgruppe zu verstehen . Der Anteil der Alkylderivate übersteigt zweckmäßig nicht 30 Gew.-% der gesamten Cyclopentadieneinheiten.

Die Copolymerisate werden in dem erfindungsgemäßen Bindemittel bevorzugt in hydrierter Form eingesetzt. Die Hydrierung wird dabei durch den erfindungsgemäßen zusätzlichen Einbau von aromatischen Kohlenwasserstoffen wesentlich erleichtert, was die Verwendung geringerer Mengen von Katalysatoren bzw. bei Anwendung der gleichen Temperatur eine schnellere Hydrierung ermöglicht.

Die Vinylester-Komponente kann aus Vinylestern von z.B. Ameisensäure, Essigsäure, Buttersäure, Isobuttersäure, Isononansäure, Laurinsäure, Dodecansäure, einer verzweigten Monocarbonsäure mit 9 bis 15 C-Atomen, jeweils allein oder im Gemisch bestehen. Bevorzugt wird Vinylacetat. Auch Ester von olefinisch ungesättigten Säuren, wie Acryl-, Methacryl-, Croton- und Ölsäure sind geeignet.

Als ungesättigte aromatische Kohlenwasserstoffe sind vor allem Styrol, aber auch Vinyltoluole und α-Methylstyrol sowie Gemische dieser Kohlenwasserstoffe geeignet.

Die Herstellung der Copolymerisate durch Wärmepolymerisation und deren Hydrierung erfolgen in an sich bekannter Weise. Das Monomerengemisch wird dabei z.B. bei Temperaturen oberhalb 200°C, vorzugsweise zwischen 250 und 280°C in einem inerten Lösungsmittel, wie Xylol, Toluol oder Cyclohexan in Abwesenheit eines Katalysators polymerisiert.

Die Hydrierung der Ausgangsharze wird katalytisch diskontinuierlich oder kontinuierlich ebenfalls nach üblichen Verfahren durchgeführt. Die Harze werden zunächst in einem gesättigten Kohlenwasserstoff, wie Cyclohexan oder Heptan, gelöst, oder sie werden aufgeschmolzen, wobei die Lösungsmittelmenge im allgemeinen 20 bis 60 Gew.-%, bezogen auf das Harz, beträgt. Die Reaktionstemperatur liegt vorzugsweise zwischen 200 und 230°C und der Wasserstoffdruck bei 20 bis 300 atü, vorzugsweise bei 50 bis 100 atü. Als Katalysatoren können z.B. Metalle wie Nickel, Palladium, Kobalt, Platin, Ruthenium, Rodium oder deren Oxyde verwendet werden. Bevorzugt wird feinverteiltes Nickel auf Kieselgur. Im allgemeinen werden etwa 5 bis 20 Gew.-% Katalysator, bezogen auf Harz eingesetzt. Nach der Hydrierung wird der Katalysator abfiltriert und das Lösungsmittel abdestilliert. Im allgemeinen verläuft die Hydrierung schneller als bei solchen Bindemitteln, die Copolymerisate aus 95 bis 60, vorzugsweise 90 bis 70 Gew.-% Cyclopentadieneinheiten und aus 5 bis 40, vorzugsweise 10 bis 30 Gew.-% von Vinylestern von Monocarbonsäuren mit 1 bis 18 C-Atomen enthalten.

Die nicht hydrierten Terpolymerisate haben im allgemeinen Molgewichte von 300 bis 3000, vorzugsweise von 400 bis 900, Erweichungstemperaturen von 20 bis 150°C, Bromzahlen von 60 bis 120 und Jodfarbzahlen (DIN 53403) zwischen 8 und 20. Die hydrierten Harze haben den gleichen Molekulargewichts- und Erweichungsbereich, während die Bromzahlen unter 20 und die Farbzahlen unter 6 liegen.

Die erfindungsgemäßen Bindemittel sind in aromatischen Kohlenwasserstoffen, wie Benzol, Toluol und Xylol löslich. Die bevorzugten Bindemittel zeigen auch gute Verträglichkeit mit aliphatischen Kohlenwasserstoffen, wie Cyclohexan, Heptan, Benzin vom Siedebereich 60 bis 95°C. Sie sind verträglich mit Kolophonium-, Terpen und Terpenphenolharzen, Äthylen-Vinylacetat-Copolymerisaten, verschiedene Wachsen, Naturkautschuk und synthetischen Kautschukarten.

Die Polymeren können in Klebstoffen äller Art verwendet werden und können dort Natur- oder Terpenharze ersetzen. Sie können insbesondere in Lösungsmittel enthaltenden Haftklebern eingesetzt werden, sind aber auch als Heißschmelzkleber oder als Mischungskomponente in Heißschmelzklebern auf Basis von Äthylen-Vinylacetat-Copolymerisaten mit Vorteil verwendbar. Darin beträgt der Anteil der erfindungsgemäßen Polymeren zweckmäßig 20 bis 60, vorzugsweise 30 bis 40 Gew.-% und derjenige der Äthylen-Vinylacetat-Copolymerisate 20 bis 60, vorzugsweise 25 bis 50 Gew.-%, jeweils bezogen auf Schmelzkleber-Gesamtgewicht, wobei das Gesamtgewicht stets 100% ist. Dabei können die Kleber noch andere übliche Zusätze, wie Füllstoffe, Wachse, Weichmacher, Stabilisatoren oder dergleichen enthalten.

Überraschenderweise liegt darin der Trübungspunkt unter 50°C. Dies zeigt, daß ihre Verträglichkeit, auch gegenüber solchen Bindemitteln, die Copolymerisate aus 95 bis 60, vorzugsweise 90 bis 70 Gew.-% Cyclopentadieneinheiten und aus 5 bis 40, vorzugsweise 10 bis 30 Gew.-% von Vinylestern von Monocarbonsäuren mit 1 bis 18 C-Atomen enthalten, wesentlich erhöht ist. Gleichzeitig weisen die erfindungsgemäßen Bindemittel verbesserte Klebeigenschaften im Vergleich zu handelsüblichen Polycyclopentadienharzen auf.

Die Haftfestikeit auf Polyester-, Melamin- und Polyvinylchlorid-Flächen sowie auf Holz ist wesentlich größer als die von hydrierten unmodifizierten Cyclopentadienharzen.

Lösungsmittelhaltige Haftkleber, insbesondere solche auf Basis von Naturkautschuk, die die erfindungegemäßen Bindemittel enhalten, zeichnen sich durch sehr gute Kohäsion und Adhäsion sowie durch ihre große Variationsbreite hinsichtlich des Bindemittelgehalts aus. Der Bindemittelanteil kann darin z.B. 40 bis 120 Gew.-%, bezogen auf Kautschuk, betragen.

In den folgenden Beispielen sind T = Gewichtsteile und % = Gewichtsprozent. Die Viskosität wurde, wenn nicht anders angegeben, jeweils in 70 %iger Toluollösung/ 20°C ermittelt.

Beispiele

I) Herstellung der Ausgangsharze

1) Dicyclopentadien-Vinylacetat-Styrol-Terpolymerisate

1.1) In einem mit Rührer ausgestatteten Autoklaven werden unter Inertgasatmosphäre 480 T Dicyclopentadien (95%ig), 60 T Vinylacetat, 60 T Styrol und 350 T Xylol vorgelegt und auf 260 bis 270°C erwärmt. Der Überdruck steigt dabei bis auf 15 bar. Die Reaktionszeit beträgt 4 Stunden. Die Ausbeute an Terpolymerisat liegt bei 90 bis 95 %, bezogen auf die Comonomeren. Kenndaten: Schmelztemperatur 70 bis 80°C (DIN 53 181), Viskosität 200 mPa.s, Bromzahl 102 (DIN 51 474).

1.2) Unter den im Beispiel 1.1) angegebenen Bedingungen werden 648 T Dicyclopentadien (95 %ig), 162 T Vinylacetat und 90 T Styrol in 350 T Xylol polymerisiert. Aus Ausbeute etwa 95%. Kenndaten des Harzes: Schmelztemperatur 57 bis 60°C (DIN 53 181), Viskosität: 123 mPa.s, Bromzahl 99 (DIN 51 474).

2) Hydriertes Terpolymerisate

2.1) In einen 1 Liter Autoklaven werden 200 T des nach 1.1)erhaltenen Terpolymerisates, 200 T Heptan oder Cyclohexan und 10 T eines Nickelkatalysators (53% Nickel auf Kieselgur oder Kohle) gegeben . Die Hydrierung erfolgt 2 bis 5 Stunden bei 230°C, unter 60 bis 100 bar Wasserstoffdruck. Nach der Hydrierung wird das Reaktionsgemisch aus dem Autoklaven genommen und der Katalysator abfiltriert. Anschließend wird das Lösungsmittel abdestilliert. Zum Schluß wird dabei entweder unter vermindertem Druck gearbeitet oder eine Wasserdampfdestillation durchgeführt. Das in 95% Ausbeute erhaltene Harz ist wasserhell und hat die gleiche Schmelztemperatur wie das Ausgangsharz. Die Viskosität beträgt 250 mPa.s, die Bromzahl 2.

2.2) Das gemäß Beispiel 1.2) erhaltene Harz wird unter den Bedingungen des Beispiels 2.1) zu einem Harz der Bromzahl 24, der Schmelztemperatur 59 bis 64°C und der Viskosität 140 mPa.s hydriert.

3) Hydriertes Polycyclopentadien (Vergleichsharz)
Als Vergleichsharz (Probe 3) wird ein hydriertes, thermisch polymerisiertes Cyclopentadienharz des Handels mit der Schmelztemperatur 86 bis 90°C, Bromzahl 3, Viskosität 340 mPa.s verwendet.

4) Hydriertes Dicyclopentadien-Vinylacetat-Copolymerisat (Vergleichsharz)
Als Vergleichsharz (Probe 4) wird ein hydriertes Dicyclopentadien-Vinylacetat-Copolymerisat aus 90 T Dicyclopentadien und 10 T Vinylacetat mit Schmelztemperatur 71°C, Bromzahl 7, Viskosität 240 mPa.s (70% Toluol/20°C) verwendet.

Die Verträglichkeit der Harze wurde gemessen in einem Äthylen-Vinylacetat-Copolymerisat mit 28 Gew.-% Vinylacetat (Schmelzindex 15) im Gewichtsverhältnis erfindungsgemäßes Copolymerisat zum Äthylen-Vinylacetat-Copolymerisat = 1 : 1. Bei den erfindungsgemäßen Harzen nach Beispielen 2.1) und 2.2) liegt der Trübungspunkt der abgekühlten Schmelze unter 50°C. Demgegenüber liegt er beim Vergleichsharz 3 über 200°C und beim Vergleichsharz 4 bei etwa 180°C.

II) Herstellung der Klebstoffe

Lösungsmittelhaltiger Haftkleber

EineKlebmittel-Lösung wird folgendermaßen hergestellt: Mischungen aus 100T Naturkautschuk und 40, 80, 100 und 120 T Copolymerisat 2.1) und 2.2) bzw. Vergleichsproben 3 und 4 werden in 600 T Benzin (Siedetemperatur 60-95°C)gelöst.

Physikalische Prüfung

Als Trägermaterial dienende Prüfbänder aus einer Folie aus Polyäthylenterephthalat wurden mit der Klebstofflösung in einer Naßschichtdicke von 200/um und 15 mm Breite beschichtet. Von den so hergestellten Klebstreifen wurde das Lösungsmittel durch 20 Minuten langes Stehenlassen bei Raumtemperatur und 20 Minuten dauerndes Stehenlassen bei 50°C entfernt. Anschließend wurden die Prüfstreifen unter atmosphärischen Bedingungen (23°C/ 50% Luftfeuchtigkeit) gelagert und nach 14 Tagen geprüft.

Zur Ermittlung der Abschälfestigkeit wurden in Anlehnung an die Vorschrift PSTC-1 (Pressure Sensitive Tape Council) Streifen der Abmessung 1,5 x 10 cm der vorstehend beschriebenen, beschichteten Folie auf eine gereinigte Standardstahlplatte mit einer 1 kg schweren Walze 10 mal ohne zusätzlichen Druck aufgewalzt. Nach 30 Minuten wurde die Abschälfestigkeit (Newton/15 mm) unter einem Winkel von 180° bei einem Vorschub von 300 mm/Minute in einer Zerreißmaschine gemessen.

Die sogenannte "Rolling Ball Tack"-Prüfung wurde in Anlehnung an die Vorschrift PSTC-6 vorgenommen. Das Gerät besteht aus einer schiefen Ebene mit einem Neigungswinkel von 31°. Die Gefällstrecke ist 5 cm lang. Die schiefe Ebene führt auf eine waagrechte Auslaufebene aus Glas, auf welcher der zu prüfende Klebstreifen befestigt wird. Als Prüfkörper dient eine Stahlkugel von 10 mm Durchmesser, die man von der schiefen Ebene auf den Klebestreifen hinunterrollen läßt. Die durchlaufene Strecke auf dem Prüfmaterial ist ein Maß für die Klebrigkeit ("Tack").

Die nach 14-tägiger Lagerung bei 20°C erhaltenen Abschälfestigkeiten und Klebrigkeitswerte sind in nachstehender Tabelle sowie in den graphischen Darstellungen wiedergegeben. Figur 1 stellt die Abschälfestigkeit und Figur 2 die Klebrigkeitswerte dar. Die Kurven 1 wurden jeweils mit dem erfindungsgemäßen Bindemittel 2.1) und die Kurven 2 mit dem Bindemittel 2.2) ermittelt. Kurven 3 zeigen die Werte für Vergleichsharz 3 und Kurven 4 diejenigen für Vergleichsharz 4. Das Harz 2.2) hat bei einem Anteil von 80 T eine Abschälfestigkeit von 5,7 und einen Tack von 3,3.

<u>Diskussion der Ergebnisse</u>

Wie die graphische Darstellung Figur 1 zeigt, sind die Werte für die Abschälfestigkeit der erfindungsgemäßen Bindemittel (Kurven 1 und 2) deutlich günstiger als die der Vergleichsproben (Kurven 3 und 4). Insbesondere im üblichen Bereich von 80 bis 100Teilen Bindemittel zeigt sich eine klare Überlegenheit der erfindungsgemäßen Bindemittel. Auch im Bereich von 60 bis

80 Teilen sinddie Werte der Kurven 1 und 2 denen der Kurven 3 und 4 zumindest gleichwertig.

In Figur 2 verlaufen die Kurven für die Klebrigkeit bei den erfindungsgemäßen Proben (Kurven 1 und 2) erheblich niedriger als die Kurven 3 und 4 mit den Vergleichsproben. Das bedeutet, daß der zurückgelegte Weg der Kugel infolge der höheren Klebrigkeit kürzer ist. Hierbei macht sich der Unterschied vor allem bei einem Anteil von 40 bis 70 und etwa 90 bis 120 Teilen bemerkbar.

Tabelle

Klebrigkeit (Rolling-Ball-Tack)

| Klebstoff nach Beispiel | Harz-Konzentration T | | | |
|---|---|---|---|---|
| | 40 | 80 | 100 | 120 |
| 2.1 | 5 | 4 | 4 | 9 |
| 2.2 | 4,3 | 3,2 | 3,3 | 5 |
| 3 (Vergleich) | 8,2 | 5 | 7 | >20 |
| 4 (Vergleich) | 7 | 4,8 | 5,8 | 13 |

## Patentansprüche

1. Bindemittel für Klebstoffe auf Basis von thermisch hergestellten Copolymerisaten cyclischer Dieneinheiten mit einem Gehalt an Copolymerisaten aus mindestens 60 Gew.-% Cyclopentadieneinheiten, wovon bis zu 30 Gew.-% alkylierte Cyclopentadieneinheiten mit 1 bis 4 C-Atomen in der Alkylgruppe sein können, und mindestens 5 Gew.-% von Vinylestern von Monocarbonsäuren mit 1 bis 18 C-Atomen, dadurch gekennzeichnet, daß das Copolymerisat a) zu 60 bis 90 Gew.-% aus Cyclopentadieneinheiten, b) zu mindestens 5 Gew.-% aus den Vinylestern und c) zu mindestens 5 Gew.-% aus olefinisch ungesättigten aromatischen Kohlenwasserstoffen aufgebaut ist und als solches oder in hydrierter Form vorliegt.

2. Bindemittel nach Anspruch 1, dadurch gekennzeichnet, daß das Copolymerisat a) zu 70 bis 85 Gew.-% aus Cyclopentadieneinheiten, b) zu mindestens 10 Gew.-% aus dem Vinylester und c) zum Rest aus ungesättigten aromatischen Kohlenwasserstoffen aufgebaut ist.

3. Bindemittel nach Anspruch 1 oder 2, dadurch gekennzeichnet, daß das Verhältnis des Vinylesters b) zu c) den ungesättigten aromatischen Kohlenwasserstoffen, vorzugsweise Styrol, zwischen 3 : 1 und 1 : 3 liegt.

4. Bindemittel nach einem oder mehreren der Ansprüche 1 bis 3, dadurch gekennzeichnet, daß die Komponente b) Vinylacetat und die Komponente c) Styrol ist.

5. Bindemittel nach einem oder mehreren der Ansprüche 1 bis 4, dadurch gekennzeichnet, daß das Copolymerisat ein durchschnittliches Molekulargewicht von 400 bis 3000 und eine Erweichungstemperatur von 20 bis 150°C aufweist.

6. Bindemittel nach Anspruch 1 oder 5, dadurch gekennzeichnet, daß das Copolymerisat hydriert ist und eine Bromzahl unter 20 hat.

7. Bindemittel nach einem oder mehreren der Ansprüche 1 bis 6, dadurch gekennzeichnet, daß das Copolymerisat in Kombination mit Äthylen-Vinylacetat-Copolymerisat vorliegt.

8. Bindemittel nach einem oder mehreren der Ansprüche 1 bis 7 in Form eines Heißschmelzklebers.

9. Bindemittel nach einem oder mehreren der Ansprüche 1 bis 8, dadurch gekennzeichnet, daß es auf der Basis des Copolymerisats in Kombination mit Naturkautschuk aufgebaut ist und in Form eines Haftklebers vorliegt.

Dr. LG/Ka
2.10.1978

FIG. 1

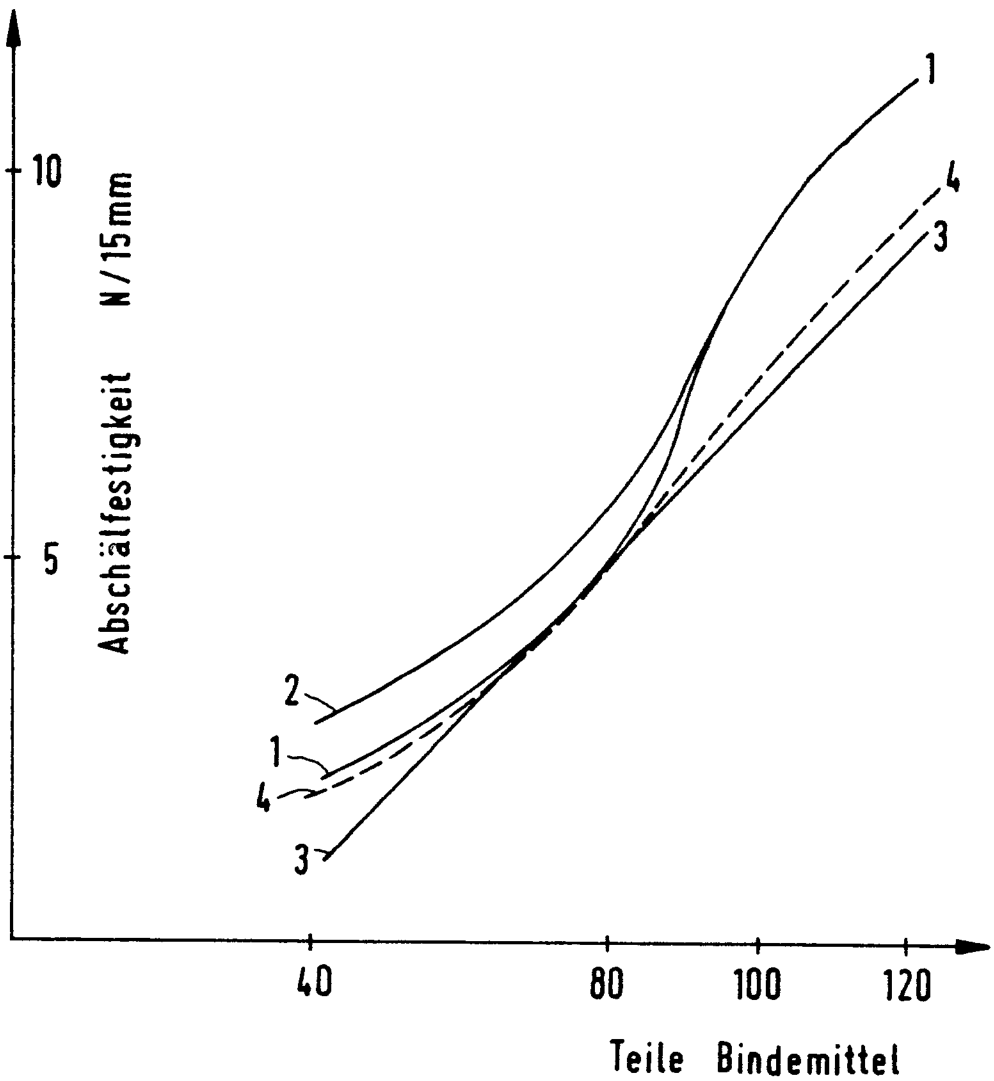

1
4
3
10
5
Abschälfestigkeit N/15mm
2
1
4
3
40
80
100
120
Teile Bindemittel

FIG. 2

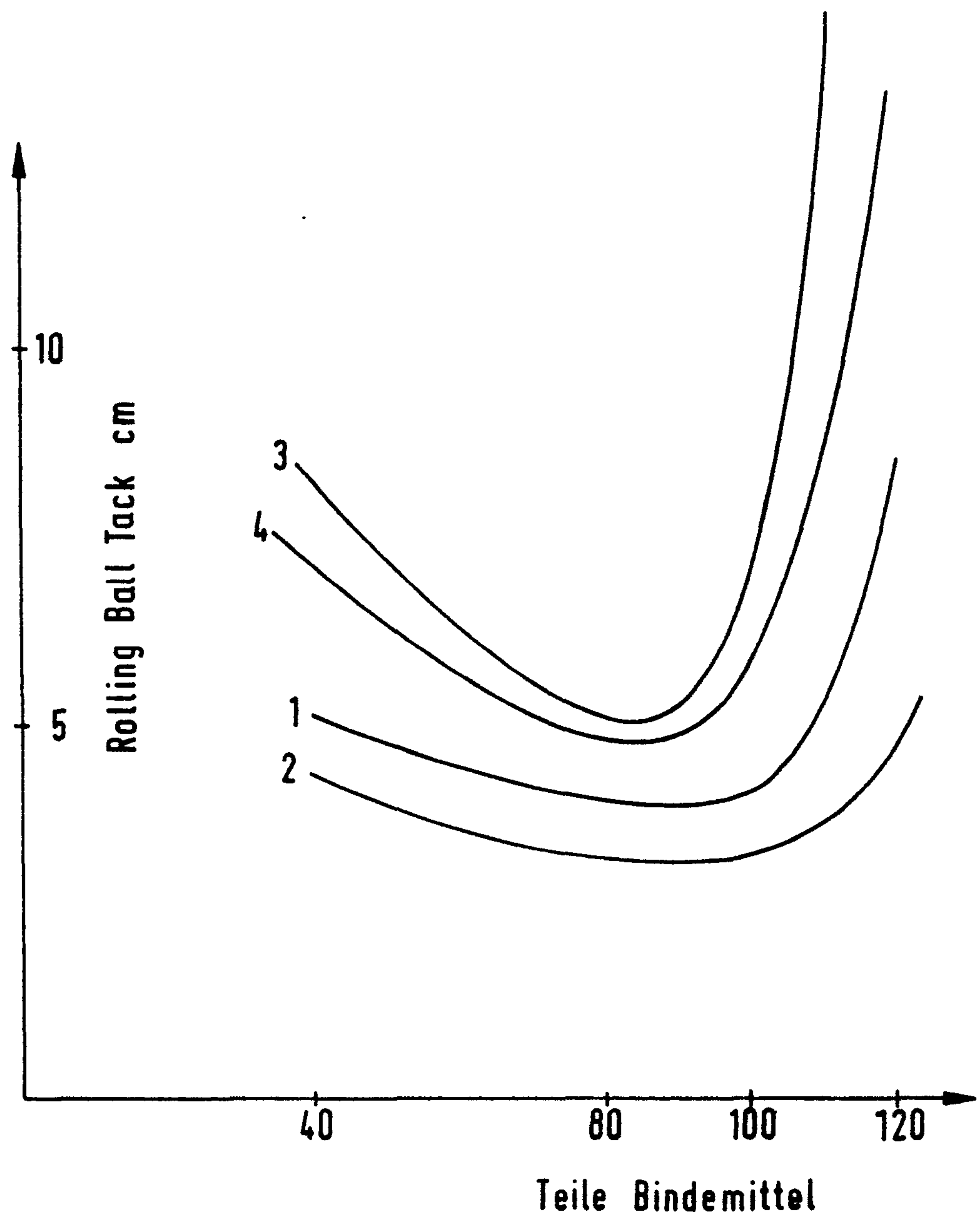
10
5
Rolling Ball Tack cm
3
4
1
2
40
80
100
120
Teile Bindemittel